# EUROPEAN PATENT APPLICATION

(11) **EP 4 716 266 A1**
(43) Date of publication of application: **25.03.2026**
(21) Application number: 23937026.5
(22) Date of filing: 17.05.2023
(51) Int. Cl.: H04W 12/0471

(54) **WIRELESS COMMUNICATION METHOD, FIRST DEVICE, AND SECOND DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Taor, Simon Edward William
(86) International application number: PCT/CN2023/094863
(87) International publication number: WO 2024/234343

(57) **Abstract**

The embodiment of the present application provides a wireless communication method, a first device, and a second device. The method comprises: when accessing a second device, a first device sends a first message to the second device; wherein the first message comprises target information encrypted via a first key. Compared with a solution involving the first device performing scanning, authentication, and association so as to complete the access process, and using four handshakes to exchange the key and then report the target information, in the present embodiment, the first device directly carries target information in a first message during the access process, thereby simplifying access and key exchange when the first device reports target information, and reducing first device access delay and energy consumed; moreover, using the key to encrypt the target information not only allows the second device to authenticate whether the first device has access qualifications, but also ensures the security of the target information.

## Description

### TECHNICAL FIELD

Embodiments of the present disclosure relate to the communication field, and in particular to a wireless communication method, a first device and a second device.

### BACKGROUND

Zero-power devices are characterized by low complexity and low cost. The zero-power devices can be maintenance-free and battery-free, support energy harvesting and/or backscatter communication, and enable large-density and large-scale deployments at a relatively low cost. An important deployment scenario is utilizing the zero-power devices as communication devices within Wireless-Fidelity (WiFi) or cellular networks.

Typically, in a WiFi system, when a station (STA) needs to communicate with an access point (AP), the STA and AP have to complete an access process through scanning, authentication, and association processes as well as complete key exchange through a 4-way handshake process, and then can perform communication. However, the zero-power devices may not be capable of supporting these processes due to their characteristics of low complexity and low power consumption. This is particularly true for ambient-power (AMP) devices, whose limited energy supply makes completing traditional access extremely challenging, resulting in excessively long access delays. Such delays pose significant problems for certain Internet of Things (IoT) application scenarios that have stringent delay requirements.

Therefore, there is an urgent need in the field for a wireless communication method that, during the process of a first device (e.g., STA) accessing a second device (e.g., AP), can authenticate the first device and ensure the security of information reported by the first device while reducing an access delay and energy consumption of the first device.

### SUMMARY

Embodiments of the present disclosure provide a wireless communication method, a first device, and a second device, which can authenticate the first device and ensure the security of the information reported by the first device while reducing an access delay and energy consumption of the first device.

In a first aspect of the embodiments of the present disclosure, there is provided a wireless communication method, which includes the following operation.

A first message is sent to a second device during a process of a first device accessing the second device.

The first message includes target information encrypted with a first key.

In a second aspect of the embodiments of the present disclosure, there is provided a wireless communication method, which includes the following operation.

A first message sent by a first device is received during a process of the first device accessing a second device.

The first message includes target information encrypted with a first key.

In a third aspect of the embodiments of the present disclosure, there is provided a first device, which is configured to implement the method in the above first aspect or any implementations thereof. Specifically, the first device includes a functional module for implementing the method in the above first aspect or any implementations thereof.

In an implementation, the first device may include a processing unit, and the processing unit is configured to perform functions related to information processing. For example, the processing unit may be a processor.

In an implementation, the first device may include a sending unit and/or a receiving unit. The sending unit is configured to perform functions related to transmission, and the receiving unit is configured to perform functions related to reception. For example, the sending unit may be a transmitter or an emitter and the receiving unit may be a receiver or an acceptor. For another example, the first device is a communication chip, the sending unit may be an input circuit or an interface of the communication chip, and the sending unit may be an output circuit or an interface of the communication chip.

In a fourth aspect of the embodiments of the present disclosure, there is provided a second device, which is configured to implement the method in the above second aspect or any implementations thereof. Specifically, the second device includes functional modules for implementing the method in the above second aspect or any implementations thereof.

In an implementation, the second device may include a processing unit, and the processing unit is configured to perform functions related to information processing. For example, the processing unit may be a processor.

In an implementation, the second device may include a sending unit and/or a receiving unit. The sending unit is configured to perform functions related to transmission, and the receiving unit is configured to perform functions related to reception. For example, the sending unit may be a transmitter or an emitter and the receiving unit may be a receiver or an acceptor. For another example, the second device is a communication chip, the receiving unit may be an input circuit or an interface of the communication chip, and the receiving unit may be an output circuit or an interface of the communication chip.

In a fifth aspect of the embodiments of the present disclosure, there is provided a first device, including a transceiver, a processor and a memory. The memory is configured to store a computer program, and the processor is configured to call and execute the computer program stored in the memory to cause the transceiver and/or the processor to implement the above method of the first aspect or any implementations thereof.

In an implementation, the processor includes one or more processors, and the memory includes one or more memories.

In an implementation, the memory may be integrated with the processor, or the memory may be disposed separately from the processor.

In an implementation, the transceiver further includes a transmitter (or an emitter) and a receiver (or an acceptor).

In a sixth aspect of the embodiments of the present disclosure, there is provided a second device, including a transceiver, a processor and a memory. The memory is configured to store a computer program, and the processor is configured to call and execute the computer program stored in the memory to cause the transceiver and/or the processor to implement the above method of the second aspect or any implementations thereof.

In an implementation, the processor includes one or more processors, and the memory includes one or more memories.

In an implementation, the memory may be integrated with the processor, or the memory may be disposed separately from the processor.

In one implementation, the transceiver includes a transmitter (or an emitter) and a receiver (or an acceptor).

In a seventh aspect of the embodiments of the present disclosure, there is provided a chip, which is configured to implement the method in any of the first aspect to second aspect or implementations thereof. Specifically, the chip includes a processor, which is configured to call and execute a computer program in a memory to cause a device equipped with the chip to implement the method in any of the first aspect to second aspect or implementations thereof.

In an eighth aspect of the embodiments of the present disclosure, there is provided a computer-readable storage medium, which is configured to store a computer program that, when running on a computer, causes the computer to implement the method in any of the first aspect to second aspect or any implementations thereof.

In a ninth aspect of the embodiments of the present disclosure, there is provided a computer program product, including computer program instructions that cause a computer to implement the method in any of the first aspect to second aspect or any implementations thereof.

In a tenth aspect of the embodiments of the present disclosure, there is provided a computer program, that causes a computer to implement the method in any of the first aspect to second aspect or any implementations thereof.

Based on the above technical solution, the first message is sent to the second device during the process of the first device accessing the second device, and the first message includes target information encrypted with a first key. Compared with the solution in which the first device completes the access process through scanning, authentication, and association processes, exchanges a key via a 4-way handshake process, and then reports target information, in the embodiments of the present disclosure, the first device directly carries the target information in the first message during the access process, which simplifies the access process and the key exchange process for the first device to report the target information, thereby reducing the access delay and energy consumption of the first device. Additionally, by encrypting the target information with the first key, the wireless communication method according to the embodiments of the present disclosure not only enables the second device to authenticate whether the first device has access rights, but also ensures the security of the target information. Thus, the wireless communication method according to the embodiments of the present disclosure can authenticate the first device and ensure the security of the information reported by the first device while reducing an access delay and energy consumption of the first device.

### BRIEF DESCRIPTION OF THE DRAWINGS

FIG. 1 is a schematic diagram of a communication system according to an embodiment of the present disclosure.
FIG. 2 is an example of an access process involving active scanning according to an embodiment of the present disclosure.
FIG. 3 is an example of an access process involving passive scanning according to an embodiment of the present disclosure.
FIG. 4 is an example of a 4-way handshake process according to an embodiment of the present disclosure.
FIG. 5 is a schematic flowchart of a wireless communication method according to an embodiment of the present disclosure.
FIG. 6 is an example of an access process in which a first device determines a first key according to an embodiment of the present disclosure.
FIG. 7 is another example of an access process in which a first device determines a first key according to an embodiment of the present disclosure.
FIG. 8 is an example of an access process in which a second device broadcasts a first key according to an embodiment of the present disclosure.
FIG. 9 is another example of an access process in which a second device broadcasts a first key according to an embodiment of the present disclosure.
FIG. 10 is a schematic block diagram of a first device according to an embodiment of the present disclosure.
FIG. 11 is a schematic block diagram of a second device according to an embodiment of the present disclosure.
FIG. 12 is a schematic block diagram of a communication device according to an embodiment of the present disclosure.
FIG. 13 is a schematic block diagram of a chip according to an embodiment of the present disclosure.

### DETAILED DESCRIPTION

The technical solutions in the embodiment of the present disclosure will be described below with reference to the accompanying drawings.

The embodiments of the present disclosure may be applied to various communication systems. For example, the communication systems that may be applied include but are not limited to: a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of NR system, a LTE-based access to unlicensed spectrum (LTE-U) system, a NR-based access to unlicensed spectrum (NR-U) system, a Universal Mobile Telecommunication System (UMTS), a Wireless Local Area Network (WLAN), a Wireless Fidelity (WiFi), a next generation communication system, a zero-power communication system, a cellular Internet of Things (IoT), a cellular passive IoT or other communication systems.

The cellular IoT is a development product of the combination of cellular mobile communication network and IoT. The cellular IoT is also called as a passive cellular IoT. The cellular IoT is a combination of a network device and passive terminals. In the cellular passive IoT, passive terminals may communicate with other passive terminals through the network device, or passive terminals can communicate using a Device to Device (D2D) communication manner, while the network device only needs to send carrier signals, that is, power supply signals, to power the passive terminals.

Generally speaking, conventional communication systems support a limited number of connections and are easy to implement. However, with the development of communication technology, mobile communication systems will not only support conventional communication, but also support, for example, D2D communication, Machine to Machine (M2M) communication, Machine Type Communication (MTC), Vehicle to Vehicle (V2V) communication, etc. Embodiments of the present disclosure may also be applied to these communication systems.

It is to be understood that the communication system in the embodiments of the present disclosure may be applied to a Carrier Aggregation (CA) scenario, a Dual Connectivity (DC) scenario, and a Standalone (SA) network distribution scenario. Embodiments of the present disclosure do not limit the spectrum of the application. For example, the embodiments of the present disclosure may be applied to a licensed spectrum or an unlicensed spectrum.

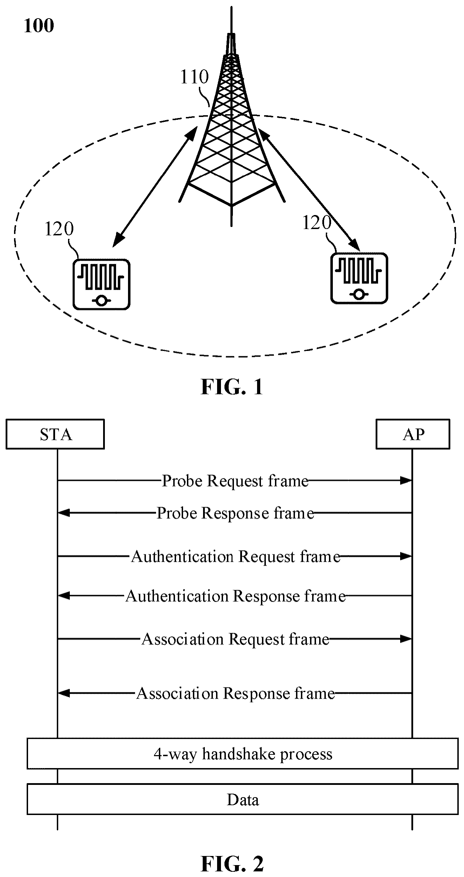

FIG. 1 is a schematic diagram of a communication system 100 according to an embodiment of the present disclosure.

As is illustrated in FIG. 1, the communication system 100 may include a network device 110, which may be a device that communicates with terminal devices 120 (or referred to as communication terminals or terminals). The network device 110 may provide communication coverage for a particular geographic area and may communicate with terminal devices located within the coverage area.

Exemplarily, the network device 110 may be a device for communicating with a mobile device, the network device 100 may be an access point (AP) in WLAN, a Base Transceiver Station (BTS) in GSM or CDMA, a NodeB (NB) in WCDMA, an Evolutional Node B (eNB or eNodeB) in LTE, a relay station or an access point, or an in-vehicle device, a wearable device, a network device (i.e., gNB) in a NR network or a network device in a future evolved PLMN network, etc.

The network device 110 provides services for a cell, and the terminal devices 120 communicate with the network device through transmission resources (e.g. frequency domain resources, or spectrum resources) used by the cell. The cell may be a cell corresponding to the network device 110 (e.g. a base station), the cell may belong to a macro base station or a base station corresponding to a small cell. The small cell may include a Metro cell, a Micro cell, a Pico cell, a Femto cell, etc. These small cells have characteristics of small coverage and low transmission power, and are suitable for providing high-speed data transmission services.

Exemplarily, the terminal device 120 may also be referred to as user equipment (UE), an access terminal, a user unit, a user station, a mobile station, a mobile platform, a remote station, a remote terminal, a mobile device, a user terminal, a terminal, a wireless communication device, a user agent or a user device. The terminal device may be a STATION (ST) in the WLAN, may be a cellular phone, a cordless phone, a Session Initiation Protocol (SIP) telephone, a Wireless Local Loop (WLL) station, a Personal Digital Assistant (PDA) device, a handheld device with wireless communication function, a computing device or other processing device connected to a wireless modem, an in-vehicle device, a wearable device, a next-generation communication system, such as a terminal device in an NR network, or a terminal device in the future evolved public land mobile network (PLMN) network, or a zero-power device etc.

For example, the terminal device 120 may be the wearable device. The wearable device may also be called a wearable intelligent device, which is a general name of wearable devices developed by applying wearable technology to design daily wear intelligently, such as glasses, gloves, watches, clothing and shoes. The wearable device is a portable device that is worn directly on the body or integrated into the clothes or accessories of the user. The wearable device is not only a kind of hardware device, but also realizes powerful functions through software support, data interaction and cloud interaction. Generalized wearable smart devices include devices that have full functions, large size, and may realize all or partial functions without relying on smart phones, such as smart watches or smart glasses, and also include device that only focus on certain application functions, and need to be used in conjunction with other devices such as smart phones, such as various smart bracelets and smart jewelry for monitoring physical signs.

As another example, the terminal device 120 may be the zero-power device. The zero-power device may be understood as a device whose power consumption is lower than preset power consumption. For example, the zero-power device includes a passive terminal, even a semi-passive terminal, etc.

It is to be understood that FIG. 1 is only an example of the present disclosure and should not be construed as limiting the present disclosure.

For example, in other alternative embodiments, the communication system 100 may include a plurality of network devices, and other numbers of terminal devices may be included within the coverage of each network device. For another example, a device having a communication function in a network/system in the embodiments of the present disclosure may be referred to as the communication device. Taking the communication system 100 illustrated in FIG. 1 as an example, the communication device may include a network device 110 and terminal devices 120 having a communication function, the network device 110 and the terminal device 120 may be specific devices described above and will not be described here. The communication system 100 may also include other communication devices such as network controllers, mobility management entities and other network entities, which are not limited by the embodiments of the present disclosure.

In addition, it is to be understood that the terms "system" and "network" of the present disclosure are often used interchangeably herein. In the present disclosure, the term "and/or" is used to describe an association relationship of associated objects, and represents that there may be three relationships. For example, A and/or B may represent the following three situations: i.e., independent existence of A, existence of both A and B and independent existence of B. In addition, the character "/" in the present disclosure generally represents that an "or" relationship is formed between the previous and next associated objects. In the present disclosure, the term "correspond" may mean that there is a direct correspondence or an indirect correspondence relationship between the two, may also mean that there is an association relationship between the two, may also be a relationship between indication and being indicated, configuration and being configured, etc. The term "indicate" in the present disclosure may be a direct indication, may be an indirect indication, or may indicate an association relationship. For example, A indicates B, which may mean that A directly indicates B, for example, B may be obtained through A. It may also mean that A indirectly indicates B, for example, A indicates C, and B may be obtained by C. It may also indicate that there is an association relationship between A and B. In the present disclosure, the term "predefined" may be implemented by prestoring corresponding codes, tables, or other manners that may be used to indicate relevant information in devices (e.g., including terminal devices and network devices), the specific implementation of which is not limited by the present disclosure. For example, pre-configuration may refer to what is defined in the protocol. It should also be understood that, in embodiments of the present disclosure, the "protocol" may refer to standard protocols in the communication field, such as LTE protocol, NR protocol, and related protocols applied in future communication systems, which are not limited herein.

In order to facilitate understanding of the technical solution of the present disclosure, the related technology is explained as below.

### [(1) a cellular passive Internet of Things (IoT)

As 5G industrial applications expand, the types of connected objects and the corresponding use cases are growing rapidly, driving ever-stricter demands on the cost and power consumption of communication terminals. Applications of battery-free, low-cost passive IoT devices have therefore become a key technology of cellular IoT: they broaden the types and number of terminals that can be attached to 5G networks, pushing the vision of "connected everything" toward reality. These passive IoT devices can leverage zero-power technologies such as RFID and evolve them further to be suitable for cellular IoT systems.

### (2) Classification of zero-power terminals.

The zero-power terminals may include the following types based on a power source and usage of zero-power terminals:

### 1. Passive-zero power terminal.

The zero-power device does not need a built-in battery. When the zero-power device approaches the network device (such as a reader of Radio Frequency Identification (RFID) system), the zero-power device is in a near-field range formed by radiation from an antenna of the network device. Therefore, an antenna of the zero-power device generates an induced current through electromagnetic induction, and the induced current drives a low-power chip circuit of the zero-power device, such that operations such as demodulation of forward link signals (which is downlink, i.e., a link from the network device to the zero-power device) and modulation of backward link signals (which is uplink, i.e., a link from the zero-power device to the network device) are realized. For a back scattering link, the zero-power device performs signal transmission in a back scattering implementation.

It can be seen that the passive zero-power device does not need built-in battery to drive either forward link or backward link, so the passive zero-power device is a true zero-power device.

The passive zero-power device does not need batteries, and a RF circuit and a baseband circuit of the passive zero-power device are very simple. For example, there is no need for a low noise amplifier (LNA), a Power amplifier (PA), a crystal oscillator, an Analog-to-Digital Converter (ADC) or other devices. Therefore, the passive zero-power device has many advantages such as small size, light weight, very cheap price and long service life.

The passive zero-power terminal may also support other energy harvesting manners. By energy harvesting from the ambient power (such as light energy, thermal energy, kinetic energy, or mechanical energy), the passive zero-power terminal may obtain the energy for driving circuit, which supports the terminal device to perform communication.

### 2. Semi-passive zero-power terminal

The semi-passive zero-power devices are not installed with conventional batteries installed either. However, the semi-passive zero-power devices may utilize a Radio Frequency (RF) energy harvesting module to harvest radio wave energy or utilize an energy harvesting module to harvest ambient power (such as solar energy, thermal energy, mechanical vibration energy, etc.). Meanwhile, the harvested energy/power is stored in an energy storage unit (such as a capacitor). After the energy storage unit obtains energy/power, it can drive a low-power chip circuit of the zero-power device, such that operations such as demodulation of forward link signal and modulation of backward link signal are realized. For a back scattering link, the zero-power device performs signal transmission via back scattering.

It can be seen that the semi-passive zero-power device does not need built-in battery to drive either forward link or backward link. Although the energy stored by capacitors is used during the operation, the energy comes from a radio energy harvested by the energy harvesting module, so it is also a true zero-power terminal.

The semi-passive zero-power device inherits many advantages of passive zero-power device, so it has many advantages such as small size, light weight, very cheap price and long service life.

### 3. Active zero-power terminal

Zero-power terminals used in some scenarios may also be active zero-power devices. These types of terminals may have built-in batteries (e.g., conventional batteries such as dry cells or rechargeable lithium batteries, etc.). The batteries are used to drive the low-power chip circuit of the zero-power device, such that operations such as demodulation of forward link signal and modulation of backward link signal are realized. But for a back scattering link, the zero-power device performs signal transmission via back scattering. Therefore, the zero-power of this kind of terminals is mainly reflected in the fact that the signal transmission in the backward link does not need the power of the terminal itself, but uses the way of back scattering. Although the active zero-power devices use batteries, due to using ultra-low-power communication technologies, the power consumption is low extremely. As a result, the battery life of the active zero-power devices can be greatly extended compared with that in the existing technology.

The active zero-power devices have a built-in battery which supplies power to a RFID chip to increase a reading and writing distance of tags and improve the reliability of communication. Thus, the active zero-power devices can be applied in scenarios with relatively high requirements for communication distance and read latency.

It is worth noting that some zero-power terminals, such as semi-passive zero-power terminals or active zero-power terminals can also have a capability of active transmission. That is, besides backscattering, communication in the backward link can also be implemented via active transmission.

### (3) Device based on ambient power.

NR systems and WiFi systems may support the low-cost, large-scale deployment and maintenance-free operation of IoT devices due to the battery-free and low-cost characteristics of the devices. IoT devices based on ambient power and supported in NR systems and WiFi systems are known as Ambient IoT or Ambient Powered IoT (AMP IoT) devices. Ambient IoT refers to IoT devices that utilize various forms of ambient power, such as radio frequency energy, light energy, solar energy, thermal energy, and mechanical energy. The Ambient IoT devices may have no power storage capacity or may have very limited power storage capabilities (such as a capacitor of a few tens of microfarads (µF)). Such devices are similar to passive devices or semi-passive devices in zero-power communication.

### (4) 802.11 access process.

Before a station (STA) accesses a Basic Service Set (BSS), it undergoes the following three stages:

### 1. Scan.

The STA first performs scanning, which is classified into active scanning and passive scanning.

The active scanning means that the STA sends a Probe Request frame on a channel that the STA supports to detect surrounding wireless networks. Upon receiving the Probe Request frame, an Access Point (AP) sends a Probe Response frame. The passive scanning means that the STA monitors a Beacon frame sent by the AP regularly on different channels to discover wireless networks. The Beacon frames contain basic information and capabilities of the BSS to which the AP belongs, including but not limited to: Basic Service Set Identifier (BSSID), Service Set Identifier (SSID), supported rates, authentication manners, encryption algorithms, Beacon frame transmission interval, and a channel in use.

Through the scanning process, the STA discovers the BSS and obtains information about the BSS.

### 2. Authentication.

The STA initiates an authentication process to verify an identity of the STA. Only stations that pass identity authentication are allowed to perform wireless access.

The authentication process includes authentication request and authentication response, corresponding to an Authentication Request frame sent by STA and an Authentication Response frame responded by AP respectively.

### 3. Association.

An authenticated STA initiates an association process.

The association process is a process for wireless link service negotiation between the STA and the AP. The association process includes association request and association response, specifically corresponding to an Association Request frame sent by STA and an Association Response frame responded by AP respectively.

FIG. 2 is an example of an access process involving active scanning according to an embodiment of the present disclosure.

As illustrated in FIG. 2, for the access process involving active scanning, the STA sends a Probe Request frame on the channel that the STA supports to detect surrounding wireless networks; after receiving the Probe Request frame, the AP sends a Probe Response frame; subsequently, the STA sends an Authentication Request frame to the AP and receives an Authentication Response frame responded by the AP; and then, the STA sends an Association Request frame to the AP and receives an Association Response frame responded by the AP, thereby completing the access process.

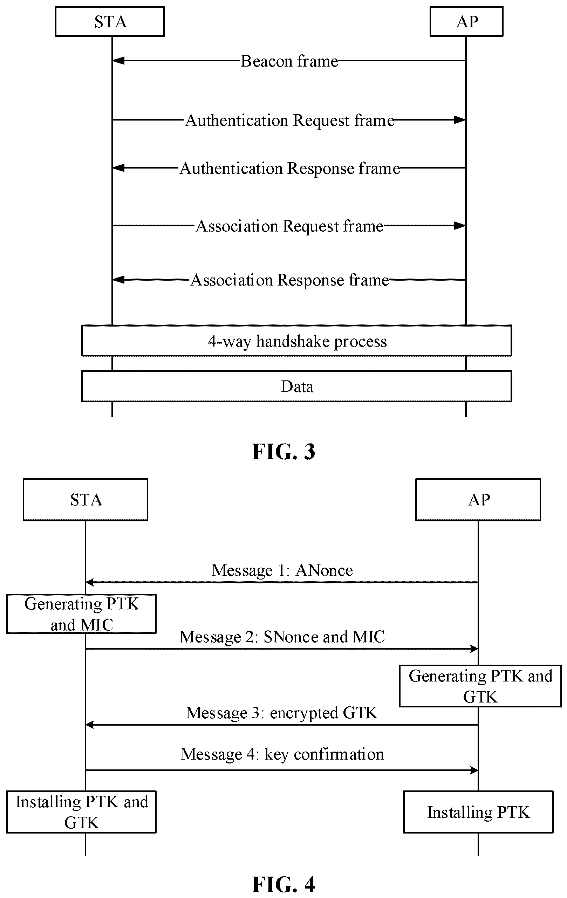

FIG. 3 is an example of an access process involving passive scanning according to an embodiment of the present disclosure.

As illustrated in FIG. 3, for the access process involving passive scanning, the STA monitors Beacon frames sent by the AP regularly on different channels; upon detecting a Beacon frame, the STA sends an Authentication Request frame to the AP and receives an Authentication Response frame responded by the AP; and then the STA sends an Association Request frame to the AP and receives an Association Response frame responded by the AP, thereby completing the access process.

After completing the above access process, the STA and AP still need to perform a 4-Way Handshake process to verify securely the legitimacy of each other and exchange keys. Only then can these keys be used for subsequent communication, verifying the legitimacy of an opposite side and preventing man-in-the-middle attacks.

FIG. 4 is an example of a 4-way handshake process according to an embodiment of the present disclosure.

As illustrated in FIG. 4, before initiating the 4-way handshake, each of the STA and AP locally generate a Pairwise Master Key (PMK) using a Key Generation Function (PRF) based on an authentication passphrase and SSID. The authentication passphrase is a password required to access the Wi-Fi, and the SSID is a service set identifier used for over-the-air transmission between the STA and AP (e.g., the SSID is typically a name of the Wi-Fi network displayed on the STA).

The 4-way handshake process mainly includes the following operations:
1. The AP sends an ANonce to the STA.

The ANonce is a random number generated by an authenticator (e.g., AP) during the authentication process and is used to generate a Pairwise Transit Key (PTK).

The operation that the AP sends the ANonce to the STA is also known as a first handshake.

2. The STA generates a SNonce and calculates the PTK and Message Integrity Check (MIC) using both the ANonce and SNonce. The STA then sends the SNonce and MIC to the AP.

The SNonce is a random number generated by an applicant (e.g., STA) during the authentication process and is also used to generate the PTK.

The operation that the STA sends the SNonce and MIC to the AP is referred to as a second handshake.

3. Upon receiving the SNonce and MIC from the STA, the AP also calculates a PTK and MIC using the SNonce and performs match checking between the calculated MIC and the received MIC, for example, checking whether the calculated MIC and the received MIC are the same. After successful checking, the AP sends an encrypted Group Temporal Key (GTK) to the STA.

The GTK may be generated using the ANonce and/or an identifier of the AP.

The GTK may be encrypted using the PTK calculated by the AP.

The operation that the AP sends the encrypted GTK to the STA is known as a third handshake.

4. The STA sends a key confirmation to the AP.

The operation that the STA sends the key confirmation to the AP is referred to as a fourth handshake.

After the STA and the AP complete the 4-way handshake, the STA installs the PTK generated after the first handshake and the received GTK. Installation refers to encrypting data with the PTK. The AP installs the PTK generated after the second handshake. Consequently, both the AP and the STA have the PTK and GTK, i.e., the PTK and GTK can be used to encrypt subsequent messages. For example, after key exchange, all unicast data frames are protected by the PTK, while all multicast and broadcast data are protected by the GTK.

Logistics and warehousing represent typical application scenarios for zero-power communication, where a large volume of goods are transferred, stored, loaded, unloaded, and inventoried frequently at logistics stations or warehouses. With the occurrence of warehouse ordering, goods warehousing, goods management, and goods dispatch, a large amount of warehousing information will be generated, which is generally characterized by frequent data read operations and high latency requirements. Zero-power devices, with their extremely low cost, small size, maintenance-free operation, durability, and long lifespan, are particularly well-suited for recording, storing, and updating goods information in logistics and warehousing. Constructing a logistics and warehousing system based on a zero-power IoT can further reduce operational costs, significantly enhance logistics and warehousing management efficiency, and contribute to the realization of smart logistics and smart warehousing. In positioning scenarios based on zero-power terminals, APs or STAs are also required to read information stored in zero-power terminals, such as positioning information stored in the zero-power terminals, so as to perform positioning through the positioning information reported by the zero-power terminals.

In logistics and warehousing scenarios, zero-power communication is mainly characterized by being frequent and a small data volume, which requires rapid reading and identifying of goods information during the logistics process. If zero-power communication is supported in the 802.11 technology, the existing access process cannot meet these communication requirements. For some zero-power communication similar to the logistics scenario, a large amount of data transmission is not required, and the main communication requirement is to identify information carried by zero-power devices bound to goods, such as an ID of the zero-power device. This functionality of the zero-power communication is similar to that of RFID, while the zero-power communication offers significantly enhanced communication distance and compatibility with 802.11 systems. Therefore, how to support this type of zero-power communication in 802.11 systems is a problem that needs to be solved.

However, as described above, in the access process in 802.11 systems, the STA and AP have to complete an access process through scanning, authentication, and association processes as well as complete key exchange through a 4-way handshake process, and then can perform communication. However, the zero-power devices may not be capable of supporting these processes due to their characteristics of low complexity and low power consumption. This is particularly true for AMP devices, whose limited energy supply makes completing traditional access extremely challenging, resulting in excessively long access delays. Such delays pose significant problems for certain IoT application scenarios that have stringent delay requirements.

In light of this, the embodiments of the present disclosure provide a wireless communication method, which can authenticate the first device and ensure the security of the information reported by the first device while reducing an access delay and energy consumption of the first device. The wireless communication method according to the present disclosure will be exemplarily described as below with reference to the accompanying drawings.

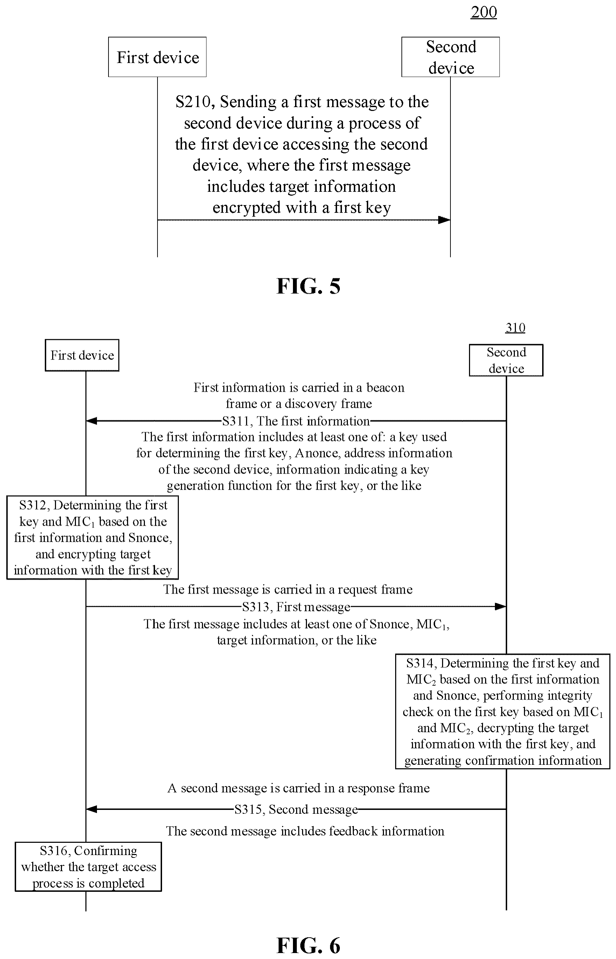

FIG. 5 is a schematic flowchart of a wireless communication method 200 according to an embodiment of the present disclosure.

It is to be understood that the wireless communication method 200 may be performed interactively by a first device and a second device. The first device may be a terminal device 120 as illustrated in FIG. 1. The second device may be a network device 110 as illustrated in FIG. 1.

Exemplarily, the first device may be a STA.

Exemplarily, the first device may be a zero-power device, and the zero-power device may include an ambient power-based device, such as an Ambient power enabled IoT device (AMP IoT) or an Ambient IoT device, a battery-free terminal, a maintenance-free terminal, and the like. The AMP IoT refers to an IoT device that uses various ambient powers, such as radio frequency energy, light energy, solar energy, thermal energy, mechanical energy and other ambient powers. The AMP IoT may have no power storage capacity or may have very limited power storage capabilities (such as a capacitor of a few tens of microfarads (µF)).

The zero-power device may be used as a communication device in WiFi or cellular networks.

From the perspective of energy harvesting, the zero-power device may also be called an energy harvesting device.

An energy supply device of the zero-power device is a device that sends an energy supply signal, and the energy supply device may be the same device as a device that sends data (such as a base station and AP), or may be a separate energy supply device.

The zero power terminal may perform backscatter communication based on a received trigger signal. The trigger signal may be used to schedule or trigger the zero power terminal to perform backscatter communication. The trigger signal carries scheduling information from the network device, or the trigger signal is a scheduling signaling or a scheduling signal sent by the network device.

It is to be noted that the energy supply signal and the trigger signal may be the same or may be two independent signals, which is not limited by the present disclosure.

For example, in a cellular network, since the zero-power device is not powered by a battery, it is necessary to provide an energy supply signal by the network device. The energy supply signal is used for the zero-power device to obtain energy and perform the corresponding communication process. A signal for energy supply (i.e., the energy supply signal) and a signal for information transmission (i.e., the trigger signal) may be two signals or the same signal. For another example, in the RFID technology, the energy supply signal and the trigger signal may be the same signal. In the cellular passive IoT technology, the energy supply signal and the trigger signal may be two independent signals. The two signals may be sent in the different frequency bands. For example, the network device sends the energy supply signal in a certain frequency band continuously or intermittently, and the zero-power device performs energy harvesting. After obtaining energy, the zero-power device may perform corresponding communication processes, such as measurement, reception of channels/signals, and sending of channels/signals.

Exemplarily, the second device may be an AP.

As illustrated in FIG. 5, the wireless communication method 200 may include the following operation.

At S210, a first device sends a first message to the second device during a process of the first device accessing the second device. The first message includes target information encrypted with a first key. Accordingly, the second device receives the first message sent by the first device during the process of the first device accessing the second device. The first message includes target information encrypted with the first key.

In the embodiments of the present disclosure, the first message is sent to the second device during the process of the first device accessing the second device, and the first message includes target information encrypted with the first key. Compared with the solution in which the first device completes the access process through scanning, authentication, and association processes, exchanges a key via a 4-way handshake process, and then reports target information, in the embodiments of the present disclosure, the first device directly carries the target information in the first message during the access process, which simplifies the access process and the key exchange process when the first device reports the target information, thereby reducing the access delay and energy consumption of the first device. Additionally, by encrypting the target information with the first key, the wireless communication method according to the embodiments of the present disclosure not only enables the second device to authenticate whether the first device has access rights, but also ensures the security of the target information. Thus, the wireless communication method according to the present disclosure can authenticate the first device and ensure the security of the information reported by the first device while reducing an access delay and energy consumption of the first device. Therefore, the wireless communication method according to the embodiments of the present disclosure is particularly suitable for the communication process or information reporting process of an ambient power-based AMP device in scenarios such as logistics and positioning.

In some embodiments, the first key is a key agreed upon between the first device and the second device.

Exemplarily, the key agreed upon between the first device and the second device may be implemented by writing the key into the first device and the second device.

In some embodiments, the method 200 further includes the following operations.

The first device receives first information sent by the second device. The first information includes the first key or information used for determining the first key.

Accordingly, the second device generates the first information and sends the first information to the first device.

Exemplarily, after the first device receives the first information, if the first information includes the first key, the first device may encrypt the target information directly based on the first key carried in the first information, and carry the target information in the first message and send the first message to the second device.

Exemplarily, after the first device receives the first information, if the first information includes the information used for determining the first key, the first device may determine the first key based on the information used for determining the first key, then encrypt the target information based on the first key, and carry the target information in the first message and send the first message to the second device.

Exemplarily, the first information includes security-related information, including the information used for determining the first key.

Exemplarily, the first information is carried in a beacon frame sent by the second device.

Exemplarily, the first information is carried in a discovery frame sent by the second device.

In some embodiments, the first information includes the information used for determining the first key, and the method 200 further includes the following operations.

The first device determines the first key based on at least one of:
the information used for determining the first key, a random number generated by the first device, or a key agreed upon between the first device and the second device.

Accordingly, after receiving the first message, the second device determines the first key in the same manner as the first device determines the first key.

Exemplarily, the key agreed upon between the first device and the second device may be a Group Master Key (GMK) or a known key of another type. By determining the first key with the key agreed upon between the first device and the second device, the security of the first key can be improved.

Taking the logistics scenario as an example, the second device may be the AP, and the second device may be a zero-power device on goods. For the goods managed by a logistics company, agreed keys may be written into zero-power devices used for the goods in advance. During the transportation of goods, only the AP devices of this logistics company can identify and read information of these zero-power devices. Further, the zero-power device may obtain the information used for determining the first key from the AP, and determine the first key based on the information used for determining the first key, the random number SNonce generated by the zero-power device, and the agreed key.

In some embodiments, the information used for determining the first key includes at least one of:
a random number generated by the second device;
address information of the second device; or
a key for determining the first key.

Exemplarily, after the random number SNonce is generated by the first device, the first key may be calculated based on one or more of SNonce, address information of the second device, a key used for determining the first key, and a random number ANonce generated by the second device by using a key generation function.

Exemplarily, if the information used for determining the first key includes a key used for determining the first key, the first device may determine the first key based on the information used for determining the first key and the random number generated by the first device.

Exemplarily, if the information used for determining the first key does not include the key used for determining the first key, the first device may determine the first key based on the information used for determining the first key, the random number generated by the first device, and the key agreed upon between the first device and the second device.

In some embodiments, the information used for determining the first key further includes information indicating a key generation function for the first key, or the key generation function for the first key is a function agreed upon between the first device and the second device.

Exemplarily, the function agreed upon between the first device and the second device may be implemented by writing the function into the first device and the second device.

Exemplarily, if the information used for determining the first key further includes information indicating a key generation function for the first key, the first device may determine the first key based on at least one of the information used for determining the first key, the random number generated by the first device, and the key agreed upon between the first device and the second device by using the indicated key generation function.

Exemplarily, if the information used for determining the first key does not include the information indicating the key generation function for the first key, the first device may determine the first key based on at least one of the key generation function agreed upon between the first device and the second device, the information used for determining the first key, the random number generated by the first device, and the key agreed upon between the first device and the second device by using the key generation function agreed upon between the first device and the second device.

It is to be understood that the key generation function for the first key is not limited by the present disclosure. In other words, in the present embodiment, the key generation function for the first key may be any function capable of generating a key, and for example, the key generation function for the first key may be a SHA1 function or a function of another type. In addition, the key generation function for the first key may also be referred to as a key derivation function for the first key, a key derivation manner for the first key, a key generation manner for the first key, an encryption scheme for the first key, or other terms having similar meanings, which is not specifically limited by the present disclosure.

In some embodiments, the first information further includes at least one of:
information indicating that the target information is to be carried in the first message and that the target information is to be encrypted;
information indicating at least one primary channel used by a target Basic Service Set (BSS);
information indicating a first time domain resource, where the first time domain resource is used to determine a time domain resource for the first message;
information indicating a first frequency domain resource, where the first time domain resource is used to determine a frequency domain resource for the first message; or
information for the first device to identify whether the second device is a target device.

Exemplarily, when the first information includes the information indicating that the target information is to be carried in the first message and that the target information is to be encrypted, the first device accesses the second device by using the first message, establishes a connection with the second device through the access process including the first message, or reports the information directly with the first message carrying the encrypted target information, thereby avoiding operations of completing the access process through scanning, authentication, and association processes and exchanging keys through a 4-way handshake process before reporting the target information, and reducing the delay and energy consumption of the access of the first device. In other alternative embodiments, an access process that includes the first message may be referred to as a target access process.

In other words, when the first information includes the information indicating that the target information is to be carried in the first message and that the target information is to be encrypted, the first information is used to trigger the first device to send the first message carrying the encrypted target information to the second device, or the first information is used to trigger the first device to access the second device through the first message carrying the encrypted target information, or the first information is used to trigger the first device to report the encrypted target information to the second device. In other words, when the first information includes the information indicating that the target information is to be carried in the first message and that the target information is to be encrypted, the first device determines that the first device may access the second device according to the target access process, so as to carry the encrypted target information in the first message of the target access process for information reporting.

Taking the logistics scenario as an example, the second device may be the AP, and the second device may be a zero-power device on goods. When the goods arrive at the warehouse, the AP needs to trigger information reporting. During the transportation of goods, there is no need for active reporting, which reduces energy consumption. Therefore, in the access process, the AP needs to send first information to the zero-power device, and trigger subsequent processes (including ID reporting or goods information reporting of the zero-power terminal) through the first information.

Exemplarily, the first information indicates at least one primary channel used by a target BSS through a frame carrying the first information.

Taking the first device as a zero-power device and the second device as an AP as an example, in order to reduce power consumption and delay caused by a scanning process of the zero-power device, the zero-power device may obtain a primary channel or a set of primary channels of the target BSS through a discovery frame carrying the first information sent by the AP, thereby reducing the problem of excessive power consumption and delay caused by the zero-power device in determining the primary channel of the target BSS subsequently by scanning on multiple channels.

Exemplarily, when the first information includes the information indicating the first time domain resource, the first device may determine a time domain resource for the first message based on the first time domain resource, so that the first device sends the first message on the time domain resource for the first message. For example, the first time domain resource may be a slot used for uplink transmission of the first device.

Exemplarily, when the first information includes the information indicating the first frequency domain resource, the first device may determine a frequency domain resource for the first message based on the first frequency domain resource, so that the first device sends the first message on the frequency domain resource for the first message. For example, the first frequency domain resource may be channel information for uplink transmission of the first device, a frequency domain position within a channel for uplink transmission of the first device, or bandwidth information for uplink transmission of the first device.

It is noteworthy that since the first information is broadcast information, after obtaining the first information, the first device may determine the time domain resource and/or frequency domain resource for the first message based on an ID of the first device.

For example, the first device may determine the time domain resource for the first message based on a result of a modulo operation on the ID of the first device based on the number of resource elements included in the first time domain resource. Similarly, the first device may determine the frequency domain resource for the first message based on a result of a modulo operation performed on the ID of the first device based on the number of resource elements included in the first frequency domain resource. Accordingly, not only the time domain resource and/or the frequency domain resource for the first message can be determined, but also the probability of collision among a plurality of devices when the plurality of devices access the second device simultaneously can be reduced.

Exemplarily, when the first information includes the information for the first device to identify whether the second device is the target device, if an identification result of the first device is that the second device is the target device, the first device accesses the second device through the first message and reports information through the first message. If the identification result of the first device is that the second device is not the target device, the first device does not access the second device or report information.

Taking the logistics scenario as an example, the second device may be an AP, and the second device may be a zero-power device associated with the goods. Accordingly, the target device may be an AP that supports performing a target access process, an AP that supports access of zero-power devices, an AP that supports establishing a connection with the second device through an access process including the first message, or an AP that supports directly reporting information with the first message, which is not limited by the embodiments of the present disclosure.

In some embodiments, the first device detects the first information on a first channel that is predefined.

Exemplarily, the first device may detect a discovery frame on the first channel that is predefined, and the discovery frame carries the first information.

In some embodiments, the first channel includes a channel corresponding to a pre-defined frequency band.

Exemplarily, the first channel includes a channel corresponding to a specific frequency band. For example, the first channel may include channel 1 in the 2.4GHz frequency band. For another example, the first channel may include channel 40, channel 44, channel 149, or channel 153 in the 5GHz frequency band. For yet another example, the first channel may include a channel corresponding to a predefined frequency band below 1GHz.

In some embodiments, the first message further includes at least one of:
a random number generated by the first device; or
Messages Integrity Check (MIC) information for the first message.

Exemplarily, the random number generated by the first device and carried in the first message is used for the second device to determine the first key. The information and key generation function used by the second device in determining the first key are the same as the information and key generation function used by the first device in determining the first key.

Exemplarily, MIC information in the first message is denoted as MIC₁ and the first device may determine the MIC₁ based on the first key determined by the first device. For example, the first device may take a part of information (for example, the first 16 bytes) of the first key determined by the first device as MIC₁. After receiving the first message, the second device may determine the first key based on the random number generated by the first device, and determine MIC₂ based on the determined first key. For example, the second device may take a part of information (for example, the first 16 bytes) of the first key determined by the second device as MIC₂. After the second device obtains MIC₂, the second device may check the first key based on MIC₁ and MIC₂. If MIC₁ and MIC₂ are the same, it is determined that the check for the first key has passed. If MIC₁ and MIC₂ are different, it is determined that the check for the first key fails, and at this time, the second device may discard the first message or reject access of the first device.

Exemplarily, after the second device determines the first key, the second device may decrypt the target information in the first message to obtain decrypted target information.

Exemplarily, the random number generated by the first device is unencrypted information.

Exemplarily, the MIC information of the first message is unencrypted information or information encrypted with the first key.

In some embodiments, the first message is carried in a wireless frame that the first device actively sends to the second device, or the first message is carried in a wireless frame that the second device triggers the first device to signal the second device.

Exemplarily, the wireless frame that the first device actively sends to the second device may be a Probe request frame or a frame of another type. Alternatively, the wireless frame that the first device actively sends to the second device may be a newly defined frame for the target access process or the first message provided in the present disclosure.

Exemplarily, the wireless frame that the second device triggers the first device to signal the second device may be an Authentication request frame, an Association request frame, or a frame of another type. Alternatively, the wireless frame that the first device actively sends to the second device may be a newly defined frame for the target access process or the first message provided in the present disclosure.

Exemplarily, the wireless frame carrying the first message may be a physical layer protocol data unit (PPDU) frame, and the PPDU frame includes a physical layer header and a data portion.

The physical layer header includes three parts: a Short Training Field (STF), a Long Training Field (LTF), and a field used to carry some specific settings of the data portion, named SIGNAL. The STF is mainly composed of 10 short symbols (i.e., t1-t10), with each symbol lasting 0.8 microseconds. The STF serves a plurality of functions, mainly achieving frame synchronization and coarse frequency synchronization. Specifically, t1-t7 mainly involve functions such as Signal Detect, Auto gain control (AGC), and Diversity Selection, while t8-t10 mainly involve functions such as Coarse Frequency, Offset Estimation and Timing Synchronization. The LTF facilitates fine frequency synchronization and channel estimation. The SIGNAL portion carries information related to the data portion, including data transmission rate, length information of a packet, reserved bits, and the like. The data portion of the PPDU may be used to carry MAC frames. A frame format of a MAC frame includes the following parts: a MAC header, a frame body, and a Frame Check Sequence (FCS).

In connection with the first message, the target message may be carried in the physical layer header or the MAC header, for example, information related to device identifier in the target message may be carried in an address field of the physical layer header or MAC header. The information related to the device identifier may include an identifier of the first device. Of course, the target message may also be carried in a frame body of the PPDU frame or other positions, which is not specifically limited by the present disclosure.

In some embodiments, the method 200 further includes the following operations.

The first device receives a second message sent by the second device. The second message includes feedback information for the target information.

Accordingly, after receiving the first message sent by the first device, the second device determines the first key based on the random number generated by the first device in the first message, performs integrity check on the first key based on the MIC information in the first message, and then decrypts the target message in the first message with the first key to obtain the decrypted target message. Further, the second device sends the second message in the access process to the first device, the second message includes feedback information for the target information, and a main function of the feedback information includes an acknowledgement (ACK) or a negative acknowledgement (NACK) on receiving the target information by the second device. Of course, the second message may also include other types of information, which is not limited by the present disclosure. After receiving the second message, the first device may determine whether the access is successful based on the feedback information. For example, if the feedback information is NACK or if the second message is not received successfully, the first device reinitiates the target access process or sends the first message.

Exemplarily, the second message may be carried in a Probe response frame, an Authentication response frame, an Association response frame, or a frame of another type. Alternatively, the wireless frame for carrying the second message may be a newly defined frame for the target access process or the second message provided in the present disclosure.

In some embodiments, the second message further includes at least one of: a second key, or information used for determining the second key. The second key is a key used by the first device in a next access process, or the second key is used to determine the key used by the first device in the next access process.

Exemplarily, if the key used for determining that the first key is a key sent by the second device to the first device, the second key is the key used by the first device in the next access process. That is, if the key used for determining the first key is the key sent by the second device to the first device, it means that the second device would broadcast the key. In this case, when the first device determines the key to be used in the next access process, the second key may be used to update the key of the key used by the first device.

Exemplarily, if the key used for determining the first key is a key agreed upon between the first device and the second device, the second key is used for determining the key used by the first device in the next access process. That is, if the key used for determining the first key is the key agreed upon between the first device and the second device, it means that the second would not broadcast the key used for determining the first key. In this case, when the first device determines the key to be used in the next access process, the second key may be used to update the key used for determining the key to be used.

In some embodiments, the second message includes the information used for determining the second key, and the method 200 further includes the following operation.

The first device determines the second key based on at least one of:
the first key, a key for encrypting part or all of information in the second message, or the information used for determining the second key.

Exemplarily, when the second message includes the second key, the second device determines the second key based on at least one of the first key, the key for encrypting part or all of the information in the second message, and the information used for determining the second key, and sends the second key to the first device through the second message.

Exemplarily, when the second message includes the information used for determining the second key, after receiving the second message, the first device may determine the second key based on at least one of the first key, the key for encrypting part or all of the information in the second message, and the information used for determining the second key and based on the second device, and perform a next access process or a next information reporting through the second key.

Exemplarily, the key generation function for the second key and the key generation function for the first key may be the same or different.

In some embodiments, the information used for determining the second key includes at least one of:
a random number generated by the second device;
address information of the second device; or
a key for determining the second key.

Exemplarily, if the second device has sent the above-mentioned first information, the information used for determining the second key may not include the address information of the second device.

Exemplarily, the random number generated by the second device included in the first information described above and the random number generated by the second device included in the information used for determining the second key may be the same or different. When they are the same, the information used for determining the second key may not include the random number generated by the second device. Similarly, the key used for determining the first key included in the first information described above and the key for determining the second key included in the information used for determining the second key may be the same or different. When they are the same, the information used for determining the second key may not include the key used for determining the second key. In addition, the key used for determining the second key may be sent to the first device through the second device, or may be a key agreed upon between the first device and the second device. For example, when the information used for determining the second key does not include the key used for determining the second key, the key used for determining the second key is a key agreed upon between the first device and the second device.

In some embodiments, part or all of the information in the second message is encrypted with the first key.

Exemplarily, at least one of the feedback information, the second key, or information used for determining the second key in the second message is encrypted with the first key.

In some embodiments, part or all of the information in the second message is encrypted with a third key. The third key is determined based on at least one of: the first key, or unencrypted information used for determining the third key in the second message.

Exemplarily, at least one of the feedback information, the second key, or information used for determining the second key in the second message is encrypted with the first key.

In some embodiments, the information used for determining the third key includes at least one of:
a random number generated by the second device;
address information of the second device; or
a key for determining the third key.

Exemplarily, if the second device has sent the first information described above, the information used for determining the third key may not include the address information of the second device.

Exemplarily, the random number generated by the second device included in the first information described above and the random number generated by the second device included in the information used for determining the third key may be the same or different. When they are the same, the information used for determining the third key may not include the random number generated by the second device. Similarly, the key used for determining the first key included in the first information described above and the key for determining the third key included in the information used for determining the third key may be the same or different. When they are the same, the information used for determining the third key may not include the key used for determining the third key. In addition, the key used for determining the third key may be sent to the first device by the second device, or may be a key agreed upon between the first device and the second device. For example, when the information used for determining the third key does not include the key used for determining the third key, the key used for determining the third key is the key agreed upon between the first device and the second device.

In some embodiments, the target information includes at least one of:
an identifier of the first device, or information stored in the first device.

Of course, in other alternative embodiments, the target information may also include other information, such as a time or location at which the next information report is expected, etc.

In some embodiments, the information stored in the first device includes a goods identifier stored in the first device.

Of course, in other alternative embodiments, the information stored in the first device may also include other types of information than the goods identifier, such as a time or location at which the next information report is expected, etc.

FIG. 6 is an example of an access process 310 where a first device determines a first key according to an embodiment of the present disclosure.

As illustrated in FIG. 6, the access process 310 in which the first device determines the first key may include the following operations S311-S316.

At S311, the first device receives the first information sent by the second device.

The first information is carried in a beacon frame or a discovery frame sent by the second device. The first information includes at least one of: a key used for determining the first key, Anonce, address information of the second device, information indicating a key generation function for the first key, and the like. The Anonce is a random number generated by the second device.

At S312, the first device determines the first key and MIC₁ based on the first information and Snonce, and encrypts target information with the first key.

The Snonce is a random number generated by the first device.

Specifically, if the information used for determining the first key further includes the information indicating the key generation function for the first key, the first device may determine the first key based on the information used for determining the first key and the random number generated by the first device by using the indicated key generation function. If the information used for determining the first key does not include the information indicating the key generation function for the first key, the first device may determine the first key based on the information used for determining the first key and the random number generated by the first device by using the key generation function agreed upon between the first device and the second device.

Further, assuming that the MIC information in the first message is denoted as MIC₁, and the first device may determine the MIC₁ based on the first key determined by the first device. For example, the first device may take a part of information (for example, the first 16 bytes) of the first key determined by the first device as MIC₁.

At S313, the first device sends a first message to the second device.

The first device sends a request frame carrying the first message to the second device. For example, the first message is carried in a Probe request frame, an Authentication request frame, an Association request frame, or a frame of another type sent by the first device. Of course, a frame for carrying the first message may be a newly defined frame for the target access process or the first message provided in the present disclosure. The first message includes at least one of Snonce, MIC₁, target information, and the like.

At S314, the first key and MIC₂ are determined based on the first information and Snonce, an integrity check is performed on the first key based on MIC₁ and MIC₂, the target information is decrypted with the first key, and confirmation information is generated.

After receiving the first message, the second device may determine the first key based on the first information and Snonce, and determine MIC₂ based on the determined first key. For example, the second device may take a part of information (for example, the first 16 bytes) of the first key determined by the second device as MIC₂. After the second device obtains MIC₂, the first key may be checked based on MIC₁ and MIC₂. If MIC₁ and MIC₂ are the same, it is determined that the check for the first key has passed. If MIC₁ and MIC₂ are different, it is determined that the check for the first key fails, and at this time, the first message may be discarded or access of the first device may be rejected. If the check for the first key is passed, the second device may decrypt the target information in the first message to obtain the decrypted target information.

At S315, the first device receives the second message sent by the second device.

The second device sends a response frame carrying the second message in the access process to the first device, the second message includes feedback information for the target information, and a main function of the feedback information includes an acknowledgement (ACK) or a negative acknowledgement (NACK) on receiving the target information by the second device. For example, the second message may be carried in a Probe response frame, an Authentication response frame, an Association response frame, or a frame of another type. Of course, the wireless frame for carrying the second message may be a newly defined frame for the target access process or the second message provided in the present disclosure.

At S316, the first device confirms whether the target access process is completed.

After receiving the second message, the first device may determine whether the access is successful based on the feedback information. For example, if the feedback information is NACK or if the second message is not received successfully, the first device reinitiates the target access process or sends the first message.

In the embodiments of the present disclosure, the first key is determined by the first device, and the key used for determining the first key is information broadcasted by the second device in the first information, thereby ensuring the security of the first key.

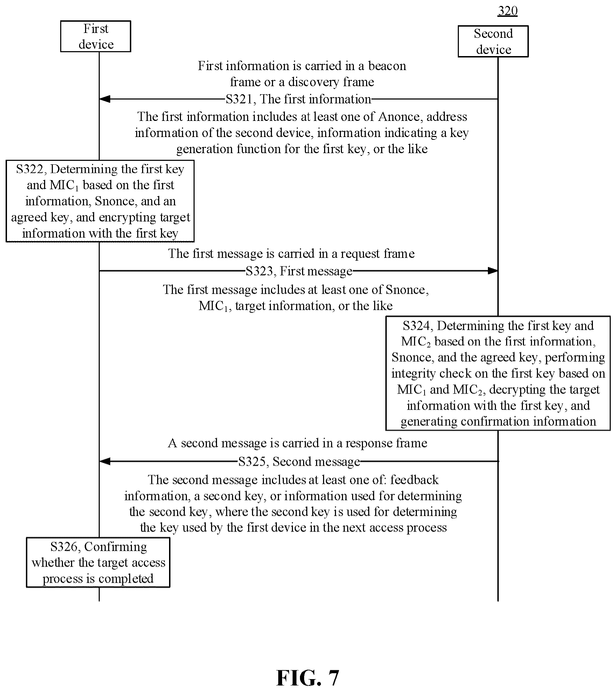

FIG. 7 is another example of an access process 320 in which a first device determines a first key according to an embodiment of the present disclosure.

As illustrated in FIG. 7, the access process 320 in which the first device determines the first key may include the following operations S321-S326.

At S321, the first device receives the first information sent by the second device.

The first information is carried in a beacon frame or a discovery frame sent by the second device. The first information includes at least one of Anonce, address information of the second device, information indicating a key generation function for the first key, and the like. The Anonce is a random number generated by the second device.

At S322, the first device determines the first key and MIC₁ based on the first information, Snonce, and an agreed key, and encrypts target information with the first key.

The Snonce is a random number generated by the first device.

Specifically, if the information used for determining the first key further includes the information indicating the key generation function for the first key, the first device may determine the first key based on the information used for determining the first key, Snonce and the key agreed upon between the first device and the second device by using the indicated key generation function. If the information used for determining the first key does not include the information indicating the key generation function for the first key, the first device may determine the first key based on the information used for determining the first key, Snonce, and the key agreed upon between the first device and the second device by using the key generation function agreed upon between the first device and the second device.

Further, assuming that the MIC information in the first message is denoted as MIC₁, and the first device may determine the MIC₁ based on the first key determined by the first device, for example, the first device may take a part of information (for example, the first 16 bytes) of the first key determined by the first device as MIC₁.

At S323, the first device sends a first message to the second device.

The first device sends a request frame carrying the first message to the second device. For example, the first message is carried in a Probe request frame, an Authentication request frame, an Association request frame, or a frame of another type sent by the first device. Of course, a frame for carrying the first message may be a newly defined frame for the target access process or the first message provided in the present disclosure. The first message includes at least one of Snonce, MIC₁, target information, and the like.

At S324, the first key and MIC₂ are determined based on the first information, Snonce, and the agreed key, an integrity check is performed on the first key based on MIC₁ and MIC₂, the target information is decrypted with the first key, and confirmation information is generated.

After receiving the first message, the second device may determine the first key based on the first information, Snonce and the key agreed upon between the first device and the second device, and determine MIC₂ based on the determined first key. For example, the second device may take a part of information (for example, the first 16 bytes) of the first key determined by the second device as MIC₂. After obtaining MIC₂, the second device may check the first key based on MIC₁ and MIC₂. If MIC₁ and MIC₂ are the same, it is determined that the check for the first key has passed. If MIC₁ and MIC₂ are different, it is determined that the check for the first key fails, and at this time, the first message may be discarded or access of the first device may be rejected. If the check for the first key is passed, the second device may decrypt the target information in the first message to obtain the decrypted target information.

At S325, the first device receives the second message sent by the second device.

The second device sends a response frame carrying the second message in the access process to the first device, the second message includes feedback information for the target information, a second key, information used for determining the second key, and the like, and the second key is used for determining the key used by the first device in the next access process. A main function of the feedback information includes an acknowledgement (ACK) or a negative acknowledgement (NACK) on receiving the target information by the second device. The second key is used for determining the key used by the first device in the next access process. That is, when the first device determines the key to be used in the next access process, the second key may be used to update the key used for determining the key to be used. The second message may be carried in a Probe response frame, an Authentication response frame, an Association response frame, or a frame of another type. Of course, the wireless frame for carrying the second message may be a newly defined frame for the target access process or the second message provided in the present disclosure.

At S326, the first device confirms whether the target access process is completed.

After receiving the second message, the first device may determine whether the access is successful based on the feedback information. For example, if the feedback information is NACK or if the second message is not received successfully, the first device reinitiates the target access process or sends the first message.

In the embodiments of the present disclosure, the first key is determined by the first device, and the key used for determining the first key is information agreed upon between the first device and the second device, thereby ensuring the security of the first key. Furthermore, the second key or information used for determining the second key is carried in the second message. The first device stores the received second key or the second key determined according to the information locally in the device, and uses the same to determine the key to be used in the next access process.

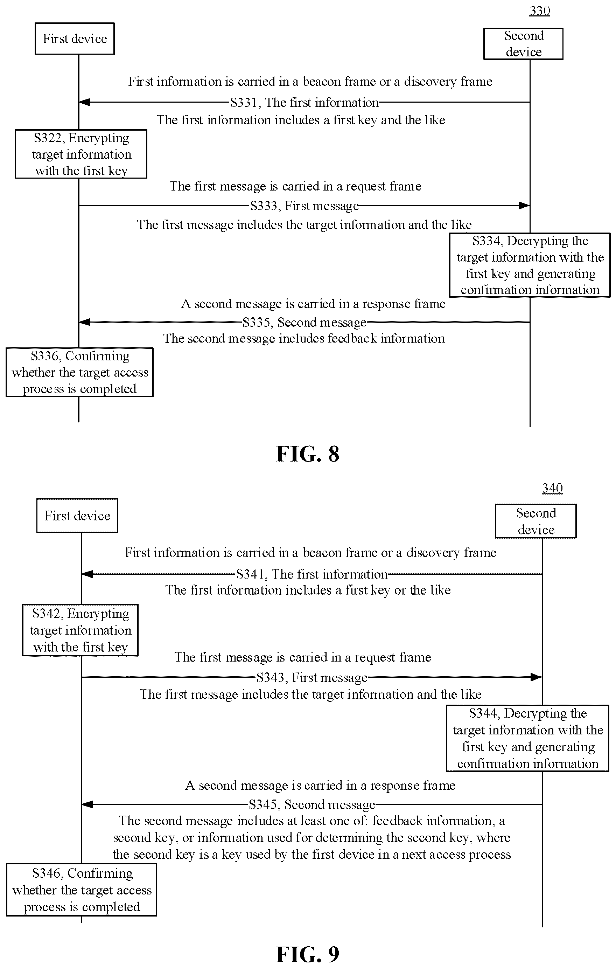

FIG. 8 is an example of an access process 330 in which a second device broadcasts the first key according to an embodiment of the present disclosure.

As illustrated in FIG. 8, the access process 330 in which the second device broadcasts the first key may include the following operations S331-S336.

At S331, the first device receives the first information sent by the second device.

The first information is carried in a beacon frame or a discovery frame sent by the second device. The first information includes a first key.

At S332, the first device encrypts target information with the first key.

Specifically, the first device encrypts the target message with the first key in the first information.

At S333, the first device sends a first message to the second device.

The first device sends a request frame carrying the first message to the second device. For example, the first message is carried in a Probe request frame, an Authentication request frame, an Association request frame, or a frame of another type sent by the first device. Of course, a frame for carrying the first message may be a newly defined frame for the target access process or the first message provided in the present disclosure. The first message includes the target information and the like.

At S334, the second device decrypts the target information with the first key and generates confirmation information.

After receiving the first message, the second device may decrypt the target information in the first message, acquire the decrypted target information, and generate feedback information for the target information.

At S335, the first device receives the second message sent by the second device.

The second device sends a response frame carrying the second message in the access process to the first device, and the second message includes feedback information for the target information. A main function of the feedback information includes an acknowledgement (ACK) or a negative acknowledgement (NACK) on receiving the target information by the second device. The second message may be carried in a Probe response frame, an Authentication response frame, an Association response frame, or a frame of another type. Of course, the wireless frame for carrying the second message may be a newly defined frame for the target access process or the second message provided in the present disclosure.

At S336, the first device confirms whether the target access process is completed.

After receiving the second message, the first device may determine whether the access is successful based on the feedback information. For example, if the feedback information is NACK or if the second message is not received successfully, the first device reinitiates the target access process or sends the first message.

In the embodiments of the present disclosure, the first key is information broadcasted by the first device in the first information, and the first device may encrypt the first message by using the first key directly. In this way, the computational complexity of the first device is reduced, and the first key used can only realize a function of distinguishing target receiving devices of the first message.

FIG. 9 is another example of an access process 340 in which a second device broadcasts the first key according to an embodiment of the present disclosure.

As illustrated in FIG. 9, the access process 340 in which the second device broadcasts the first key may include the following operations S341-S346.

At S341, the first device receives the first information sent by the second device.

The first information is carried in a beacon frame or a discovery frame sent by the second device. The first information includes a first key.

At S342, the first device encrypts target information with the first key.

Specifically, the first device encrypts the target message with the first key in the first information.

At S343, the first device sends a first message to the second device.

The first device sends a request frame carrying the first message to the second device. For example, the first message is carried in a Probe request frame, an Authentication request frame, an Association request frame, or a frame of another type sent by the first device. Of course, a frame for carrying the first message may be a newly defined frame for the target access process or the first message provided in the present disclosure. The first message includes the target information and the like.

At S344, the second device decrypts the target information with the first key and generates confirmation information.

After receiving the first message, the second device may decrypt the target information in the first message, acquire the decrypted target information, and generate feedback information for the target information.

At S345, the first device receives the second message sent by the second device.

The second device sends a response frame carrying the second message in the access process to the first device, and the second message includes feedback information for the target information. A main function of the feedback information includes an acknowledgement (ACK) or a negative acknowledgement (NACK) on receiving the target information by the second device. The second key is a key used by the first device in the next access process. That is, when the first device determines the key to be used in the next access process, the second key may be used to update the key of the key used by the first device. The second message may be carried in a Probe response frame, an Authentication response frame, an Association response frame, or a frame of another type. Of course, the wireless frame for carrying the second message may be a newly defined frame for the target access process or the second message provided in the present disclosure.

At S346, the first device confirms whether the target access process is completed.

After receiving the second message, the first device may determine whether the access is successful based on the feedback information. For example, if the feedback information is NACK or if the second message is not received successfully, the first device reinitiates the target access process or sends the first message.

In the embodiments of the present disclosure, the first key is information broadcasted by the first device in the first information, and the first device may encrypt the first message by using the first key directly. In this way, the computational complexity of the first device is reduced, and the first key used can only realize a function of distinguishing target receiving devices of the first message. Furthermore, the second key or information used for determining the second key is carried in the second message. The first device locally stores the received second key or the second key determined according to the information, for performing comparison with a received key in the next access process. If two keys are the same, it is determined that a device that sends the key is a device that the first device can access.

Preferred embodiments of the present disclosure have been described in detail with reference to the accompanying drawings, but the present disclosure is not limited to the specific details of the above embodiments. Within the scope of the technical concept of the present disclosure, various simple modifications can be made to the technical solution of the present disclosure, and these simple modifications all belong to the scope of protection of the present disclosure. For example, each of the specific technical features described in the above specific embodiments may be combined in any suitable manner without contradiction, and various possible combinations are not further described in the present disclosure in order to avoid unnecessary repetition. For another example, various embodiments of the present disclosure may be combined with each other arbitrarily so long as they do violate the idea of the present disclosure, and they should likewise be regarded as the disclosed content of the present disclosure.

It is to be understood that in various method embodiments of the present disclosure, the size of the sequence numbers of the above-mentioned processes does not mean the order of execution, and the execution order of each process is to be determined by its function and inherent logic, and should not be limited in any way to the implementation process of the embodiments of the present disclosure.

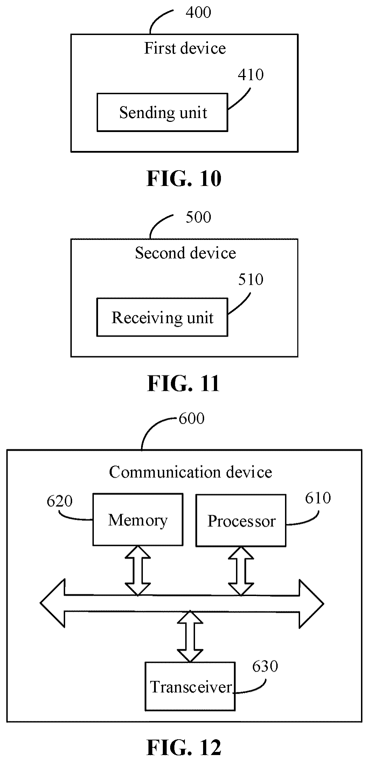

The method embodiments of the present disclosure have been described in detail above with reference to FIG. 1 to FIG. 9, and the apparatus embodiments of the present disclosure have been described in detail below with reference to FIG. 10 to FIG. 13.

FIG. 10 is a schematic block diagram of a first device 400 according to an embodiment of the present disclosure.

As illustrated in FIG. 10, the first device 400 may include a sending unit 410.

The sending unit 410 is configured to send a first message to a second device during a process of the first device accessing the second device.

The first message includes target information encrypted with a first key.

In some embodiments, the first key is a key agreed upon between the first device and the second device.

In some embodiments, the sending unit 410 is further configured to:
receive the first information sent by the second device.

The first information includes the first key or information used for determining the first key.

In some embodiments, the first information includes the information used for determining the first key.

The sending unit 410 is further configured to:
determine the first key based on at least one of:
the information used for determining the first key, a random number generated by the first device, or a key agreed upon between the first device and the second device.

In some embodiments, the information used for determining the first key includes at least one of:
a random number generated by the second device;
address information of the second device; or
a key for determining the first key.

In some embodiments, the information used for determining the first key further includes information indicating a key generation function for the first key, or the key generation function for the first key is a function agreed upon between the first device and the second device.

In some embodiments, the first information further includes at least one of:
information indicating that the target information is to be carried in the first message and that the target information is to be encrypted;
information indicating at least one primary channel used by a target Basic Service Set (BSS);
information indicating a first time domain resource, where the first time domain resource is used to determine a time domain resource for the first message;
information indicating a first frequency domain resource, where the first time domain resource is used to determine a frequency domain resource for the first message; or
information for the first device to identify whether the second device is a target device.

In some embodiments, the sending unit 410 is specifically configured to:
detect the first information on a first channel that is predefined.

The first channel includes a channel corresponding to a pre-defined frequency band.

In some embodiments, the first message further includes at least one of:
a random number generated by the first device; or
Messages Integrity Check (MIC) information for the first message.

In some embodiments, the first message is carried in a wireless frame that the first device actively sends to the second device, or the first message is carried in a wireless frame that the second device triggers the first device to signal the second device.

In some embodiments, the sending unit 410 is further configured to:
receive a second message sent by the second device.

The second message includes feedback information for the target information.

In some embodiments, the second message further includes at least one of: a second key, or information used for determining the second key. The second key is a key used by the first device in a next access process, or the second key is used to determine the key used by the first device in the next access process.

In some embodiments, the second message includes the information used for determining the second key.

The sending unit 410 is further configured to:
determine the second key based on at least one of:
the first key, a key for encrypting part or all of information in the second message, or the information used for determining the second key.

In some embodiments, the information used for determining the second key includes at least one of:
a random number generated by the second device;
address information of the second device; or
a key for determining the second key.

In some embodiments, part or all of the information in the second message is encrypted with the first key.

In some embodiments, part or all of the information in the second message is encrypted with a third key. The third key is determined based on at least one of: the first key, or unencrypted information used for determining the third key in the second message.

In some embodiments, the information used for determining the third key includes at least one of:
a random number generated by the second device;
address information of the second device; or
a key for determining the third key.

In some embodiments, the target information includes at least one of:
an identifier of the first device, or information stored in the first device.

In some embodiments, the information stored in the first device includes a goods identifier stored in the first device.

It is to be understood that the apparatus embodiments and the method embodiments may correspond to each other, and similar descriptions may refer to the method embodiments, Specifically, the first device 400 illustrated in FIG. 10 may correspond to a corresponding entity executing the wireless communication method according to the embodiments of the present disclosure, and the foregoing and other operations and/or functions of respective units in the first device 400 are used respectively to implement the corresponding flow in the respective methods according to the embodiments of the present disclosure, which is not repeated here for the sake of brevity.

FIG. 11 is a schematic block diagram of a second device 500 according to an embodiment of the present disclosure.

As illustrated in FIG. 11, the second device 500 may include a receiving unit 510.

The receiving unit 510 is configured to receive a first message sent by a first device during a process of the first device accessing the second device.

The first message includes target information encrypted with a first key.

In some embodiments, the first key is a key agreed upon between the first device and the second device.

In some embodiments, the receiving unit 510 is further configured to:
send first information to the first device.

The first information includes the first key or information used for determining the first key.

In some embodiments, the first information includes the information used for determining the first key.

The receiving unit 510 is further configured to:
determine the first key based on at least one of:
the information used for determining the first key, a random number generated by the first device, or a key agreed upon between the first device and the second device.

In some embodiments, the information used for determining the first key includes at least one of:
a random number generated by the second device;
address information of the second device; or
a key for determining the first key.

In some embodiments, the information used for determining the first key further includes information indicating a key generation function for the first key, or the key generation function for the first key is a function agreed upon between the first device and the second device.

In some embodiments, the first information further includes at least one of:
information indicating that the target information is to be carried in the first message and that the target information is to be encrypted;
information indicating at least one primary channel used by a target Basic Service Set (BSS);
information indicating a first time domain resource, where the first time domain resource is used to determine a time domain resource for the first message;
information indicating a first frequency domain resource, where the first time domain resource is used to determine a frequency domain resource for the first message; or
information for the first device to identify whether the second device is a target device.

In some embodiments, the receiving unit 510 is specifically configured to:
send the first information to the first device on a first channel that is predefined.

The first channel includes a channel corresponding to a pre-defined frequency band.

In some embodiments, the first message further includes at least one of:
a random number generated by the first device; or
Messages Integrity Check (MIC) information for the first message.

In some embodiments, the first message is carried in a wireless frame that the first device actively sends to the second device, or the first message is carried in a wireless frame that the second device triggers the first device to signal the second device.

In some embodiments, the receiving unit 510 is further configured to: send a second message to the first device.

The second message includes feedback information for the target information.

In some embodiments, the second message further includes at least one of: a second key, or information used for determining the second key. The second key is a key used by the first device in a next access process, or the second key is used to determine the key used by the first device in the next access process.

In some embodiments, the second message includes the information used for determining the second key.

The receiving unit 510 is further configured to:
determine the second key based on at least one of:
the first key, a key for encrypting part or all of information in the second message, or the information used for determining the second key.

In some embodiments, the information used for determining the second key includes at least one of:
a random number generated by the second device;
address information of the second device; or
a key for determining the second key.

In some embodiments, part or all of the information in the second message is encrypted with the first key.

In some embodiments, part or all of the information in the second message is encrypted with a third key. The third key is determined based on at least one of: the first key, or unencrypted information used for determining the third key in the second message.

In some embodiments, the information used for determining the third key includes at least one of:
a random number generated by the second device;
address information of the second device; or
a key for determining the third key.

In some embodiments, the target information includes at least one of:
an identifier of the first device, or information stored in the first device.

In some embodiments, the information stored in the first device includes a goods identifier stored in the first device.

It is to be understood that the apparatus embodiments and the method embodiments may correspond to each other, and similar descriptions may refer to the method embodiments, Specifically, the second device 500 illustrated in FIG. 11 may correspond to a corresponding entity executing the wireless communication method according to the embodiments of the present disclosure, and the foregoing and other operations and/or functions of the respective units in the second device 500 are used respectively to implement the corresponding flow in the respective methods according to the embodiments of the present disclosure, which is not repeated here for the sake of brevity.

The communication device of the embodiments of the present disclosure is described above from the perspective of functional modules with reference to the accompanying drawings. It is to be understood that the functional modules may be implemented in hardware form, by instructions in software form, or by a combination of hardware and software modules. In particular, each operation of the method embodiments in the embodiments of the present disclosure may be completed by the integrated logic circuit of the hardware in the processor and/or the instruction in the form of software, and the operations of the method disclosed in combination with the embodiments of the present disclosure can be directly embodied as the execution of the hardware decoding processor or the combined execution of the hardware and software modules in the decoding processor. Optionally, the software modules may be located in a random access memory, a flash memory, a read-only memory, a programmable read-only memory or an electrically erasable programmable memory, a register and other mature storage medium in the art. The storage medium is located in the memory, and the processor reads information in the memory to complete the operations of the aforementioned method embodiments in conjunction with its hardware.

For example, the sending unit or the receiving unit referred to above may be implemented by a transceiver.

FIG. 12 is a schematic structural diagram of a communication device 600 according to an embodiment of the present disclosure.

As illustrated in FIG. 12, the communication device 600 may include a processor 610.

The processor 610 may call and execute a computer program from the memory to implement the method in the embodiments of the present disclosure.

As illustrated in FIG. 12, the communication device 600 may also include a memory 620.

The memory 620 may be used for storing information and may also be used for storing codes, instructions and the like executed by the processor 610. The processor 610 may call and execute a computer program from the memory 620 to implement the method in the embodiments of the present disclosure. The memory 620 may be a separate device independent of the processor 610 or may be integrated in the processor 610.

As illustrated in FIG. 12, the communication device 600 may also include a transceiver 630.

The processor 610 may control the transceiver 630 to communicate with other devices, and in particular may send information or data to other devices, or receive information or data sent by other devices. The transceiver 630 may include a transmitter and a receiver. The transceiver 630 may further include antennas. The number of antennas may be one or more.

It is to be understood that the various components in the communication device 600 are connected by a bus system. The bus system includes a power bus, a control bus and a status signal bus in addition to a data bus.

It will be understood that the communication device 600 may be a terminal device of the embodiments of the present disclosure, and the communication device 600 may implement corresponding processes implemented by the terminal device in the respective methods of the embodiments of the present disclosure. That is, the communication device 600 of the embodiments of the present disclosure may correspond to the first device 400 of the embodiments of the present disclosure and may correspond to the corresponding entity executing method 200 of the embodiments of the present disclosure, which will not be repeated here for the sake of brevity. Similarly, the communication device 600 may be a network device of the embodiments of the present disclosure, and the communication device 600 may implement corresponding processes implemented by the network device in the respective methods of the embodiment of the present disclosure. That is, the communication device 600 of the embodiments of the present disclosure may correspond to the second device 500 of the embodiments of the present disclosure and may correspond to a corresponding entity executing the method 300 according to the embodiments of the present disclosure, which will not be repeated here for the sake of brevity.

In addition, in an embodiment of the present disclosure, there is further provided a chip.

For example, the chip may be an integrated circuit chip, having signal processing capabilities that may implement or perform the methods, operations and logic diagrams disclosed in embodiments of the present disclosure. The chip may also be referred to as system-level chip, system chip, chip system or system-on-chip or the like. Optionally, the chip may be applied to various communication devices, so that the communication devices equipped with the chip may perform the methods, operations and logic block diagrams disclosed in embodiments of the present disclosure.

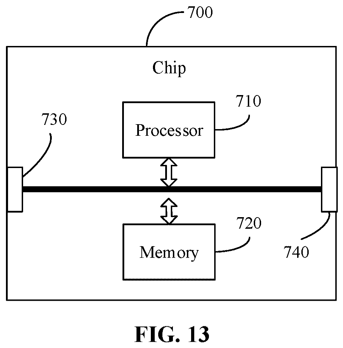

FIG. 13 is a schematic structural diagram of a chip 700 according to an embodiment of the present disclosure.

As illustrated in FIG. 13, the chip 700 may include a processor 710.

The processor 710 may call and execute a computer program from the memory to implement the method in the embodiments of the present disclosure.

As illustrated in FIG. 13, the chip 700 may also include a memory 720.

The processor 710 may call and execute a computer program from the memory 720 to implement the method in the embodiments of the present disclosure. The memory 720 may be used for storing indication information and may also be used for storing codes, instructions and the like executed by the processor 710. The memory 720 may be a separate device independent of the processor 710 or may be integrated in the processor 710.

As illustrated in FIG. 13, the chip 700 may include an input interface 730.

The processor 710 may control the input interface 730 to communicate with other devices or chips, and in particular to obtain information or data sent by other devices or chips.

As illustrated in FIG. 13, the chip 700 may include an output interface 740.

The processor 710 may control the output interface 740 to communicate with other devices or chips, and in particular to output information or data to other devices or chips.

It is to be understood that the chip may applied to be the network device of the embodiments of the present disclosure, and the chip may implement corresponding processes implemented by the network device and the terminal device in various methods of the embodiments of the present disclosure, which will not be repeated here for the sake of brevity.

It is to be understood that the various components in the chip 700 are connected by a bus system. The bus system includes a power bus, a control bus and a status signal bus in addition to a data bus.

The processors referred to above may include, but are not limited to:
a general purpose processor, a Digital Signal Processor (DSP), an Application Specific Integrated Circuit (ASIC), a Field Programmable Gate Array (FPGA) or other programmable logic devices, discrete component gates or transistor logic devices, or discrete hardware components and the like.

The processor may implement or execute the methods, operations and logic diagrams disclosed in the embodiments of the present disclosure. The operations of the method disclosed in the embodiments of the application may be directly embodied as the completion of the execution of the hardware decoding processor or the completion of the combined execution of the hardware and software modules in the decoding processor. The software modules may be located in a random access memory, a flash memory, a read-only memory, a programmable read-only memory or an electrically erasable programmable memory, a register and other mature storage media in the art. The storage medium is located in the memory, and the processor reads information in the memory to complete the operations of the aforementioned method in conjunction with its hardware.

The memory referred to above includes, but is not limited to:
volatile memory and/or non-volatile memory. The non-volatile memory may be a Read-Only Memory (ROM), a Programmable ROM (PROM), an Erasable PROM (EPROM), an Electrically EPROM (EPROM) or a flash memory. The volatile memory may be a Random Access Memory (RAM), which serves as an external cache. By way of illustration but not limitation, many forms of RAM are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchronous Link DRAM (SLDRAM), a Direct Rambus RAM (DR RAM).

It is to be noted that the memory described herein is intended to include these and any other suitable types of memory.

In an embodiment of the present disclosure, there is further provided a computer-readable storage medium, which is configured to store a computer program. The computer-readable storage medium stores one or more programs including instructions that, when executed by a portable electronic device including a plurality of application programs, cause the portable electronic device to perform the wireless communication method provided by the embodiments of the present disclosure. Optionally, the computer-readable storage medium may be applied to the network device of the embodiments of the present disclosure, and the computer program causes a computer to implement corresponding processes implemented by the network device in the methods of the embodiments of the present disclosure, which will not be repeated here for the sake of brevity. Optionally, the computer-readable storage medium may be applied to the mobile terminal/terminal device of the embodiments of the present disclosure, and the computer program causes a computer to implement corresponding processes implemented by the mobile terminal/terminal device in the methods of the embodiments of the present disclosure, which will not be repeated here for the sake of brevity.

In an embodiment of the present disclosure, there is further provided a computer program product, which includes a computer program. Optionally, the computer program product may applied to the network device of the embodiments of the present disclosure, and the computer program causes a computer to implement corresponding processes implemented by the network device in the methods of the embodiments of the present disclosure, which will not be repeated here for the sake of brevity. Optionally, the computer program product may applied to the mobile terminal/terminal device of the embodiments of the present disclosure, and the computer program causes a computer to implement corresponding processes implemented by the mobile terminal/terminal device in the methods of the embodiments of the present disclosure, which will not be repeated here for the sake of brevity.

In an embodiment of the present disclosure, there is further provided a computer program. The computer program, when being executed by a computer, causes the computer to implement the wireless communication method provided by the embodiments of the present disclosure. Optionally, the computer program may be applied to the network device of the embodiments of the present disclosure, and the computer program, when running on a computer, causes the computer to implement corresponding processes implemented by the network device in the methods of the embodiments of the present disclosure, which will not be repeated here for the sake of brevity. Optionally, the computer program may applied to the mobile terminal/terminal device of the embodiments of the present disclosure, the computer program, when running on a computer, causes the computer to implement corresponding processes implemented by the mobile terminal/terminal device in the methods of the embodiments of the present disclosure, which will not be repeated here for the sake of brevity.

In the present disclosure, there is further provided a communication system, which may include the above terminal device and network device to form the communication system 100 as illustrated in FIG. 1, which will not be repeated here for the sake of brevity. It is to be noted that the term "system" herein may also be referred to as "network management architecture" or "a network system".

It should also be understood that the term used in the embodiments of the present disclosure and the appended claims is for the purpose of describing specific embodiments only and is not intended to limit the embodiments of the present disclosure. For example, the singular forms of "a", "said", "above" and "the" as used in embodiments of the present disclosure and the appended claims are also intended to include a plural form, unless the context clearly dictates otherwise.

Those skilled in the art may realize that the various example units and algorithm steps described in connection with the embodiments disclosed herein can be implemented in electronic hardware or a combination of computer software and electronic hardware. Whether these functions are performed in hardware or software depends on the specific application and design constraints of the technical solution. Professionals can use different methods for each particular application to implement the described functionality, but such implementation should not be considered beyond the scope of embodiments of the present disclosure. When the functions are realized in the form of software functional units and sold or used as an independent product, they may be stored in a computer readable storage medium. Based on such an understanding, the technical solutions according to the embodiments of the present disclosure, in essence or the part contributing to the prior art, or part of the technical solutions can be embodied in the form of a software product. The computer software product is stored in a storage medium, and includes several instructions so that a computer device (which may be a personal computer, a server, a network device or the like) implements all or part of the method according to embodiments of the disclosure. The aforementioned storage medium includes various media capable of storing a program code such as a USB disk, a mobile hard drive disk, a read-only memory, a random access memory, a magnetic disk or an optical disk.

Those skilled in the art will appreciate that, for convenience and conciseness of description, the specific operating processes of the above-described systems, apparatuses and units may refer to the corresponding processes in the aforementioned method embodiments and will not be repeated herein. In several embodiments provided herein, it is to be understood that the disclosed systems, apparatuses and methods may be implemented in other manners. For example, the partition of units or modules or components in the above-described apparatus embodiment is only a logical functional partition, which may be implemented in another way, for example, multiple units or modules or components may be combined or integrated into another system, or some units or modules or components may be ignored or not executed. For another example, the units/modules/components described above as separation/display elements may or may not be physically separated, i.e. may be located in a place, or may be distributed over a plurality of network elements. Part or all of the units/modules/components can be selected according to the actual needs to achieve the purpose of the embodiments of the present disclosure. Finally, it is to be noted that the coupling or direct coupling or communication connection between each other illustrated or discussed may be indirect coupling or communication connection through some interfaces, devices or units, and may be electrical, mechanical or other form.

The above is only the specific implementation of the embodiments in the present disclosure, but the scope of protection of the embodiments in the present disclosure is not limited thereto. Any person skilled in the art can easily think of changes or substitutions within the technical scope disclosed in the embodiments of the present disclosure, which is to be covered within the protection scope of the embodiments in the present disclosure. Therefore, the scope of protection of the embodiments in the present disclosure shall be subject to the scope of protection of the claim.

## Claims

1. A wireless communication method, applicable to a first device, the method comprising:
sending a first message to a second device during a process of the first device accessing the second device,
wherein the first message comprises target information encrypted with a first key.

2. The method of claim 1, wherein the first key is a key agreed upon between the first device and the second device.

3. The method of claim 1, further comprising:
receiving first information sent by the second device,
wherein the first information comprises the first key or information used for determining the first key.

4. The method of claim 3, wherein the first information comprises the information used for determining the first key; and
wherein the method further comprises:
determining the first key based on at least one of:
the information used for determining the first key, a random number generated by the first device, or a key agreed upon between the first device and the second device.

5. The method of claim 3 or 4, wherein the information used for determining the first key comprises at least one of:
a random number generated by the second device;
address information of the second device; or
a key for determining the first key.

6. The method of claim 5, wherein the information used for determining the first key further comprises information indicating a key generation function for the first key, or the key generation function for the first key is a function agreed upon between the first device and the second device.

7. The method of claim 5, wherein the first information further comprises at least one of the following:
information indicating that the target information is to be carried in the first message and that the target information is to be encrypted;
information indicating at least one primary channel used by a target Basic Service Set (BSS);
information indicating a first time domain resource, wherein the first time domain resource is used to determine a time domain resource for the first message;
information indicating a first frequency domain resource, wherein the first time domain resource is used to determine a frequency domain resource for the first message; or
information for the first device to identify whether the second device is a target device.

8. The method of any one of claims 3 to 7, wherein receiving the first information sent by the second device comprises:
detecting the first information on a first channel that is predefined.

9. The method of claim 8, wherein the first channel comprises a channel corresponding to a pre-defined frequency band.

10. The method of any one of claims 1 to 9, wherein the first message further comprises at least one of:
a random number generated by the first device; or
Messages Integrity Check (MIC) information for the first message.

11. The method of any one of claims 1 to 10, wherein the first message is carried in a wireless frame that the first device actively sends to the second device, or the first message is carried in a wireless frame that the second device triggers the first device to signal the second device.

12. The method of any one of claims 1 to 11, further comprising:
receiving a second message sent by the second device,
wherein the second message comprises feedback information for the target information.

13. The method of claim 12, wherein the second message further comprises at least one of: a second key, or information used for determining the second key, wherein the second key is a key used by the first device in a next access process, or the second key is used to determine the key used by the first device in the next access process.

14. The method of claim 13, wherein the second message comprises the information used for determining the second key; and
wherein the method further comprises:
determining the second key based on at least one of:
the first key, a key for encrypting part or all of information in the second message, or the information used for determining the second key.

15. The method of claim 14, wherein the information used for determining the second key comprises at least one of:
a random number generated by the second device;
address information of the second device; or
a key for determining the second key.

16. The method of any one of claims 12 to 15, wherein part or all of the information in the second message is encrypted with the first key.

17. The method of any one of claims 12 to 15, wherein part or all of the information in the second message is encrypted with a third key, wherein the third key is determined based on at least one of: the first key, or unencrypted information used for determining the third key in the second message.

18. The method of claim 17, wherein the information used for determining the third key comprises at least one of:
a random number generated by the second device;
address information of the second device; or
a key for determining the third key.

19. The method of any one of claims 1 to 18, wherein the target information comprises at least one of:
an identifier of the first device, or information stored in the first device.

20. The method of claim 19, wherein the information stored in the first device comprises a goods identifier stored in the first device.

21. A wireless communication method, applicable to a second device, the method comprising:
receiving a first message sent by a first device during a process of the first device accessing the second device,
wherein the first message comprises target information encrypted with a first key.

22. The method of claim 21, wherein the first key is a key agreed upon between the first device and the second device.

23. The method of claim 21, further comprising:
sending first information to the first device,
wherein the first information comprises the first key or information used for determining the first key.

24. The method of claim 23, wherein the first information comprises the information used for determining the first key; and
wherein the method further comprises:
determining the first key based on at least one of:
the information used for determining the first key, a random number generated by the first device, or a key agreed upon between the first device and the second device.

25. The method of claim 23 or 24, wherein the information used for determining the first key comprises at least one of:
a random number generated by the second device;
address information of the second device; or
a key for determining the first key.

26. The method of claim 25, wherein the information used for determining the first key further comprises information indicating a key generation function for the first key, or the key generation function for the first key is a function agreed upon between the first device and the second device.

27. The method of claim 25, wherein the first information further comprises at least one of the following:
information indicating that the target information is to be carried in the first message and that the target information is to be encrypted;
information indicating at least one primary channel used by a target Basic Service Set (BSS);
information indicating a first time domain resource, wherein the first time domain resource is used to determine a time domain resource for the first message;
information indicating a first frequency domain resource, wherein the first time domain resource is used to determine a frequency domain resource for the first message; or
information for the first device to identify whether the second device is a target device.

28. The method of any one of claims 23 to 27, wherein sending the first information to the first device comprises:
sending the first information to the first device on a first channel that is predefined.

29. The method of claim 28, wherein the first channel comprises a channel corresponding to a pre-defined frequency band.

30. The method of any one of claims 21 to 29, wherein the first message further comprises at least one of:
a random number generated by the first device; or
Messages Integrity Check (MIC) information for the first message.

31. The method of any one of claims 21 to 30, wherein the first message is carried in a wireless frame that the first device actively sends to the second device, or the first message is carried in a wireless frame that the second device triggers the first device to signal the second device.

32. The method of any one of claims 21 to 31, further comprising:
sending a second message to the first device,
wherein the second message comprises feedback information for the target information.

33. The method of claim 32, wherein the second message further comprises at least one of: a second key, or information used for determining the second key, wherein the second key is a key used by the first device in a next access process, or the second key is used to determine the key used by the first device in the next access process.

34. The method of claim 33, wherein the second message comprises the information used for determining the second key; and
wherein the method further comprises:
determining the second key based on at least one of:
the first key, a key for encrypting part or all of information in the second message, or the information used for determining the second key.

35. The method of claim 34, wherein the information used for determining the second key comprises at least one of:
a random number generated by the second device;
address information of the second device; or
a key for determining the second key.

36. The method of any one of claims 32 to 35, wherein part or all of the information in the second message is encrypted with the first key.

37. The method of any one of claims 32 to 35, wherein part or all of the information in the second message is encrypted with a third key, wherein the third key is determined based on at least one of: the first key, or unencrypted information used for determining the third key in the second message.

38. The method of claim 37, wherein the information used for determining the third key comprises at least one of:
a random number generated by the second device;
address information of the second device; or
a key for determining the third key.

39. The method of any one of claims 21 to 38, wherein the target information comprises at least one of:
an identifier of the first device, or information stored in the first device.

40. The method of claim 39, wherein the information stored in the first device comprises a goods identifier stored in the first device.

41. A first device, comprising:
a sending unit, configured to send a first message to a second device during a process of the first device accessing the second device,
wherein the first message comprises target information encrypted with a first key.

42. A second device, comprising:
a receiving unit, configured to receive a first message sent by a first device during a process of the first device accessing the second device,
wherein the first message comprises target information encrypted with a first key.

43. A first device, comprising:
a transceiver, a processor, and a memory, wherein the memory is configured to store a computer program, and the processor is configured to call and execute the computer program stored in the memory to cause the transceiver and/or the processor to implement the method of any one of claims 1 to 20.

44. A second device, comprising:
a transceiver, a processor, and a memory, wherein the memory is configured to store a computer program, and the processor is configured to call and execute the computer program stored in the memory to cause the transceiver and/or the processor to implement the method of any one of claims 21 to 40.

45. A chip, comprising:
a processor, configured to call and execute a computer program from a memory to cause a device equipped with the chip to implement the method of any one of claims 1 to 20 or the method of any one of claims 21 to 40.

46. A computer-readable storage medium, having stored a computer program, wherein the computer program, when running on a computer, causes the computer to execute the method of any one of claims 1 to 20 or the method of any one of claims 21 to 40.

47. A computer program product, comprising computer program instructions that cause a computer to implement the method of any one of claims 1 to 20 or the method of any one of claims 21 to 40.

48. A computer program, which causes a computer to execute the method of any one of claims 1 to 20 or the method of any one of claims 21 to 40.
